# EUROPEAN PATENT SPECIFICATION

(11) **EP 3 058 498 B1**
(45) Date of publication and mention of the grant of the patent: **01.04.2020**
(21) Application number: 13783625.0
(22) Date of filing: 14.10.2013
(51) Int. Cl.: G06F 21/31, G06Q 20/10, G06Q 20/32

(54) **CRM SECURITY CORE**
CRM-SICHERHEITSKERN
NOYAU DE SÉCURITÉ CRM

(43) Date of publication of application: 24.08.2016
(73) Proprietor: Cryptomathic Ltd, Cambridge, Cambridgeshire CB4 0WG (GB)
(72) Inventor: BOND, Mike, Cambridge Cambridgeshire CB4 0WG (GB); LANDROCK, Matthew, San Jose, California 95113-1116 (US); LANDROCK, Peter, Cambridge Cambridgeshire CB3 0DX (GB)
(74) Representative: Martin, Philip John
(86) International application number: PCT/GB2013/052669
(87) International publication number: WO 2015/055972

(56) References cited:
- WO-A1-2013/056104
- WO-A1-2013/059866
- US-A1- 2004 039 924
- US-A1- 2013 263 212
- "Mobile Proximity Payment Issue and Recommendations 1.0 ; Mobile Proximity Payment Issue and Recommendations 1.0", MOBILE PROXIMITY PAYMENT ISSUE AND RECOMMENDATIONS 1.0, OPEN MOBILE ALLIANCE (OMA), 4330 LA JOLLA VILLAGE DR., SUITE 110 SAN DIEGO, CA 92122 ; USA , 10 December 2006 (2006-12-10), pages 1-88, XP064017300, Retrieved from the Internet: URL:ftp/Public_documents/ARCH/ARC-MCC/2006 / [retrieved on 2006-12-10]
- JUN XU ET AL: "Transparent runtime randomization for security", RELIABLE DISTRIBUTED SYSTEMS, 2003. PROCEEDINGS. 22ND INTERNATIONAL SY MPOSIUM ON 6-8 OCT. 2003, PISCATAWAY, NJ, USA,IEEE, 6 October 2003 (2003-10-06), pages 260-269, XP010662101, DOI: 10.1109/RELDIS.2003.1238076 ISBN: 978-0-7695-1955-5

## Description

### BACKGROUND OF THE INVENTION

### Field of the Invention

The present invention generally relates to computer security devices and mechanisms, and more particularly to security cores of apps with enrollment and authentication services to support next generation networked apps.

### Background of the Invention

Mobile banking represents money in the modern currency. Just like old fashioned hard currency, it attracts all manner of criminal attacks leveraged with whatever tools, weapons, devices, and information are available to assist. So mobile and cloud banking applications must be up to the job of protecting the money, the user, the bank, and anyone else with an investment in the financial system and its transactions. Otherwise, mobile and cloud banking applications will lose trust and the money will move away to where it is secure.

Monetary gain is not the only goal a criminal may have in mind. Other objectives include revenge, anarchy, curiosity, and perceived public good. The resources that can be brought to bear by an attacker can range from insignificant to the truly substantial. Very sophisticated Government military units are now even starting to engage in these malicious activities for their own strategic and sometimes unfathomable goals.

The constantly improving computation levels and communications capabilities of modern smartphones now makes it possible to secure them adequately for native mobile banking applications. But current mobile banking apps on smartphones are mostly unambitious, mainly browser-based ones offering limited Internet banking functionality, e.g., branch and ATM cash machine locators. Similarly, the security of server-side applications unless enforced using HSMs (Hardware Security Modules) is similarly weak. Improved security is the key to getting mobile and cloud banking applications to support more native functionality, e.g., balance, transfers, payee setup, etc. Security cores are one way to pull that off. A mixed model with some parts of the user mobile banking experience still being delivered through web view controls should be retained for good flexibility.

One further challenge to mobile and cloud banking applications is they must maintain an appropriate level of security in a fast-changing environment where platforms and operating systems can transform completely in a matter of months rather than years.

The Juniper Networks Malicious Mobile Threats Report of 2010-2011 says, "The threats to mobile devices are real, and reach far beyond simple viruses to include malware, loss and theft, data communication interception, exploitation and misconduct, and direct attacks....As mobile device usage increases, the absence of installed mobile security products is playing an enabling role in the vulnerability of mobile devices and the exploitation of sensitive data and personal identifying information (PII)."

The threat vectors challenging mobile or networked client banking applications include malware as in spyware, viruses, Trojans, and worms; loss and theft as in data lost due to misplaced or stolen mobile devices; data communication interception as in eavesdropping on communications, including emails, texts, voice calls, etc., originating from or being sent to a mobile device or networked client process; exploitation and misconduct as in the inappropriate use of a such a device for personal amusement or monetary gain; and, direct attacks as in short message service (SMS) and browser exploits.

Static passwords have proven to be unreliable and easy to compromise. So one-time-password (OTP) smartphone applications that generate dynamic passwords have started to appear in Google Android, Apple iOS, Blackberry, and other platforms as well as symmetric or asymmetric cryptographic schemes in client-server instances not involving the user. As an example, the Cryptomathic (Aarhus, Denmark) Mobile AuthApp security suite is based upon industry standards such as mobile time-based one-time password (TOTP), hashed message authentication code (HMAC)-based one-time password (HOTP), OATH challenge response algorithms (OCRA) and the Europay-MasterCard-Visa (EMV) chip authentication program (CAP) transaction signing, e.g., Cryptomathic Mobile AuthApp™. The Cryptomathic solution is fully integrated with their back-end servers, e.g., Authenticator™ and Cryptomathic Signer™.

Soft-token solutions have also become widespread, they are easy to deploy and highly cost-effective, compared with legacy tokens, and offers formidable two-factor (2FA) security.

US2004039924 discloses a system and method for securing a computing device using a master cryptographic key that is bound to the device.

WO2013056104 discloses a platform for performing secure personalized transactions in a multi-domain ecosystem includes a personalization tier that enables service provider personalization for one or more ecosystem elements stored on a mobile device.

US2013263212 discloses systems and methods for a secure mobile framework to securely connect applications running on mobile devices to services within an enterprise.

"Mobile Proximity Payment Issues and Recommendation" Mobile Payment Forum, Version 1.0, October 2006, is written for consideration by those implementing mobile proximity payment systems, or components of a system. It also contains information of use to forums defining technology which may form a basis for implementation of a mobile proximity payment system.

### SUMMARY OF THE INVENTION

The invention is defined by the appended independent claims. Further embodiments are defined in the dependent claims. According to a first aspect of the invention, there is provided a security core for supporting native functionalities in a banking app of a computing device built for network communication with a server, comprising:
enrollment and authentication applications programming interfaces (APIs) for a banking app;
a registration workflow included in the APIs and configured to establish keys and unique identifiers;
an API for device-wide enrollment to set a key and a user identifier (UID) which is visible across different apps on the same client device;
an API for installation-specific enrollment shaped to set a key and a UID that are unique to an individual installation of said mobile app;
an API for device characterizations including identification, malware detection and software version/patch status; and
an API for using enrolled device data to enable customer intent or device authentication, for mobile app logon, for approving transactions, and for transaction level authentication/encryption;
wherein, the security core as a whole is extendable in a continuing series of software releases and simultaneously implementable in a plurality of smartphone platforms; and
wherein, user and transaction authentication are supported with a predetermined level of security in a banking app.

The API for device-wide enrollment may set a key and a user identifier (UID) constructed to remain constant.

The security core may further comprise some or all of the following: an API for stream-level data authentication and encryption to support general purpose app communications security; an API for ticket/cookie generation for caching of authentication results across sessions; handover of tickets/cookies within app ecosystem and between native apps, mixed apps, and pure web apps; device compromise management including blacklisting; app self-integrity checking/assurance; denial of service resistance in protocol design keeping to a minimum processing which can be caused before authentication.

The security core may further comprise some or all of the following: a data storage applications programming interface (API), an enrollment control API, a session API, a transaction API, and a stream API; a routing obfuscator (RO) with a RO controller that includes a configurable jump table and is connected to each of the data storage, enrollment control, session, transaction, and stream APIs; a dummy data storage API, a dummy enrollment control API, a dummy session API, a dummy transaction API, and a dummy stream API all externally visible and all inwardly routable through the RO to their corresponding API counterparts according to a runtime initialization of said jump table; and a communications API connected to a registration protocol and session protocol modules through protocol obfuscators.

The security core may further comprise a long-term, public half of a key K deliverable to the mobile app configured to be shared with an authentication service provider and that can be used to implement specific authentication protocols; wherein, a server is configured to keep a private half of the key in a secure coprocessor to prevent thefts of the key. For example, a session key KS may be generated and encrypted under a hardcoded public key of a server, namely "Kpub". An encrypted session key, {KS}Kpub may then be delivered to the server using either HTTP or HTTPS, depending on a URL provided for the server that is hardcoded into the mobile banking app. A unique serial number may be generated for the mobile device with the server when it receives the session key under Kpub. A request may be sent from the server to a hardware security module (HSM) to generate a long-term key K for the mobile device, and to use the session key to encrypt the long term key, the serial number, and some server-chosen configuration parameters, [{K,serial,settings}]KS, for storage in a long-term database as a record. The [{K,serial,settings}]KS may be forwarded in a message from the HSM to the mobile device and the [{K,serial,settings}]KS message may be returned from the server to the mobile banking app over an HTTP-HTTPS link. The session key KS may be decrypted and integrity-checked, to recover the key K, and collect any configuration data. The long term key K and configuration data may be stored in local storage that is accessible only to that specific mobile banking app, and that is obfuscated by encryption using a hardcoded key KO.

At least one of the APIs of the security core may have two separate, independently produced implementations of the same functional module that can be swapped at will to create an artificially high code delta between minor updates of an app to drive up cost of adapting malware to attack new releases of said app.

The security core may further comprise a plurality of technical security mechanisms configured to resist malware infections and reverse engineering attempts through the use of obfuscation, stubs, and/or camouflage. The security core may further comprise a downloadable app installable on a client device; and an operating system hosted on a standardized platform; wherein, registration and authentication keys can be secured for a networked device to engage in banking transactions.

The security core may further comprise a routing obfuscator operating at an outer layer; at least one previous version of a security core included as camouflage and providing resistance to efforts of reverse engineering; and an internal transport layer security (TLS) library configured to be used instead of an operating system's TLS layer; wherein, cookies are managed internally in the security core rather than by operating system libraries.

The security core may further comprise internal anti-tamper detector stubs configured to notice deviations from normal program operation that might arise due to code modification, and to set flags for later action. The security core may further comprise external anti-tamper detector stubs configured to spot tampering outside a main core, and to more closely bind the main core to an application, and to camouflage its call profile and API interactions.

The security core may further comprise non-standard crypto algorithms configured to drive up the costs of attempts to reverse engineer the security core.

The security core may further comprise at least one API routing and/or jump table configured to be initialized only at run-time, or only when pulled from a network as part of app launching, as a defense against static analysis and to frustrate manual reverse engineering efforts.

According to another aspect of the invention, there is provided a mobile banking method, comprising:
publishing a mobile banking app to an app store on the Internet;
downloading said mobile banking app to a mobile device from the Internet;
launching said mobile banking app with the mobile device;
detecting a first install and entering an initialization phase;
generating a session key KS and encrypting it under a hardcoded public key of a server, namely "Kpub";
delivering a session key, {KS}Kpub, to the server using either HTTP or HTTPS, depending on a URL provided for the server that is hardcoded into the mobile banking app;
generating a unique serial number for the mobile device with the server when it receives the session key {KS}Kpub;
sending a request from the server to a hardware security module (HSM) to generate a long-term key K for the mobile device, and to use the session key to encrypt the long term key, the serial number, and some server-chosen configuration parameters, [{K,serial,settings}]KS, for storage in a long-term database as a record;
forwarding the [{K,serial,settings}]KS in a message from the HSM to the mobile device;
returning the [{K,serial,settings}]KS message from the server to the mobile banking app over an HTTP-HTTPS link;
decrypting the session key KS and integrity-checking the message to recover the key K, and collecting any configuration data;
storing the long term key K and configuration data in local storage that is accessible only to that specific mobile banking app, and that is obfuscated by encryption using a hardcoded key KO.

The features of the security core apply equally to the method.

In brief, the security core embodiment of the present invention supports a downloadable mobile banking app for a smartphone, in the form of an embeddable set of functionality for connected mobile and cloud applications. It provides a secure environment for the networked applications on open platforms to conduct registration, enrollment, and transaction workflows with corresponding back-end servers on the network. It may include defenses against static analysis, attempts at reverse engineering, and real-time transaction fraud. A principal defense that may be employed is obfuscation of the protocols, APIs, algorithms, and program code. It may actively detect, thwart, misdirect, and report reverse engineering attempts and malware activity it senses. A routing obfuscator may be configured to operate at the outer layer. Previous core designs may be retained as camouflage. An internal TLS library may be used rather than the OS TLS layer. Cookies may be managed internally in the core rather than in the operating system libraries.

These and other objects and advantages of the present invention will no doubt become obvious to those of ordinary skill in the art after having read the following detailed description of the preferred embodiments that are illustrated in the various drawing figures.

### IN THE DRAWINGS

Fig. 1 is a functional block diagram of a banking application registration workflow in an embodiment of the present invention;
Fig. 2 is a functional block diagram of a banking application embodiment of the present invention and a back end server; and
Fig. 3 is a functional block diagram of a CRM security core embodiment of the present invention, as is a part of those devices and systems of Figs. 1-2.

### DETAILED DESCRIPTION OF THE PREFERRED EMBODIMENTS

A banking application and financial transaction system are provided with a registration workflow to establish keys, unique identifiers, and support for device-wide enrollment. The keys and user identification (UID) are such that they will remain constant and be visible across many different apps on the same device, but vary with different devices. An installation specific enrollment must set a key and user ID that are unique to an individual installation of an app. Such further provides support for device characterization, identification, malware detection and software version-patch status. Enrolled platform data is used to for customer or automated intent authentication, for app logon and for approving transactions, including transaction level authentication-encryption. Stream-level data authentication and encryption may also be included to support general purpose app communications security.

Tickets - cookies or session IDs are generated for caching of authentication results across sessions. Handovers of tickets are provided within app ecosystem and between native apps, mixed apps (native with additional webview components), and pure web apps. Device compromise management includes blacklisting, and the mobile banking app does its own self-integrity checking-assurance. The protocol design is resistant to denial of service, keeping to a minimum processing that can be caused before authentication.

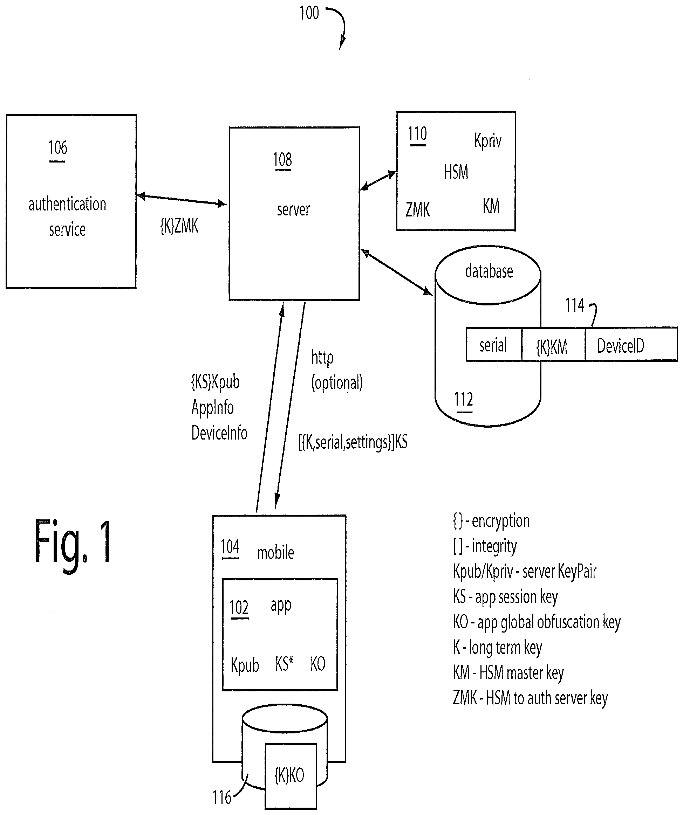

In Fig. 1, a banking application registration workflow 100 forms the backbone of a security architecture. The registration workflow 100 delivers a long-term key "Kpub" to a banking app 102 hosted in a device hosting the application 104. Kpub is shared with an independent authentication service provider 106, and can be used to implement OATH, HOTP, or TOTP, and other specific authentication protocols such as e.g. Kerberos or RADIUS, or used to bootstrap the delivery of new credentials.

An app containing a hardwired public key "Kpub" corresponding to a server 108 is downloaded or otherwise delivered from an app store. The server 108 hides its private half of the key, "Kpriv", in a hardware security module (HSM) 110. HSM 110 is a high performance secure coprocessor intended to prevent thefts of the private half of the key Kpriv.

In a method embodiment of the present invention, authentication service provider 106 publishes banking app 102 to an app store. A banking user downloads app 102 onto their device 104. The user launches app 102. App 102 is configured to detect a first install and enters an initialization phase. App 102 generates a session key KS* and encrypts this under a hardcoded public key of server 108, namely "Kpub", denoted [KS]Kpub. App 102 delivers a session key, {KS}Kpub, to server 108 using either HTTP or HTTPS over a device network or the Internet, depending on a uniform resource locator (URL) provided for the server that is also hardcoded into app 102. When server 108 receives session key KS encrypted under Kpub, it generates a unique serial number for the device 104, e.g., a long random number. Server 108 sends a request to the HSM 110 to generate a long-term key K for device 104, and to use the session key to encrypt the long term key, the serial number, and some server-chosen configuration parameters, e.g., [{K,serial,settings}]KS, to be stored in a long-term database 112 as a record 114. The HSM 110 forwards the [{K,serial,settings}]KS in a message to mobile 104. Server 108 returns the [{K,serial,settings}]KS message to banking application 102 over the HTTP-HTTPS link. Banking application 102 uses the session key KS to decrypt and integrity-check the message, to recover the key K, and to gather any configuration data. Banking application 102 stores the long term key K and configuration data in a local storage 116 that is accessible only to that specific app, obfuscated by encryption using a hardcoded key KO. The key KO is derived from hashing, e.g., using the NSA's secure hash algorithm, SHA-1. Server 108 can subsequently deliver any key K to another service under a transport key, a Zone Master Key, ZMK, or it can provide the authentication services itself.

Registration workflow 100 delivers a shared secret between two parties connected together with a unique identifier. It is then up to the authentication service provider to allow the user to bind their authentication token identifier together with their account.

Workflow 100 uses standard cryptography, namely Rivest-Shamir-Adleman (RSA) or elliptic curve cryptography (ECC) and Advanced Encryption Standard (AES) encryption with data formats that are suitable for use with an HSM on the server side. Such a configuration allows registration servers to scale to support millions of registrants without making the server itself vulnerable, since the HSM is used to protect the keys. The same cryptographic algorithms can also be implemented efficiently and effectively in pure software on the device 104, not relying on underlying libraries that might change. The banking application security core is therefore self-contained.

If the authentication service provider 106 has to change the registration site, they can do it with DNS mapping, or they can publish an application update. The same processes allow the hardcoded public key Kpub to be changed. The device 104 preferably sends its model information and serial number during the registration process to enable statistics on platform usage to be collected by the server 108.

Banking application 102 is configured not to store its authentication key in any area of the file system that is subject to back-up. So when device 104 is replaced or recovered from backup it will be necessary to re-register it so a new key will be generated.

The security approach above relies totally on operating system file access controls to prevent any key from being stolen. Thus in any device where the malware typically operates within app permissions that were granted, the keys can remain secure. For example, since there is no permission for override access to all files on file system.

But for malware that has root access, such keys will be trivial to recover. Keychain-keyring storage of the key is deliberately not used as for many authentication algorithms temporary access to the key is equivalent to theft of the key so currently confers little advantage. However, the use of a keychain may incur interaction with cloud-based backup services and here it is preferable to steer clear of storing user credentials centrally with a third-party service provider.

In an improved security architecture embodiment of the present invention, real users of the authentication service are subject to attack, and such attacks are detectable. If the attack is a malware threat, it can be detected by: (1) monitoring app stores for similarly named authentication apps purporting to be the real mobile banking app 102; (2) monitoring transaction logs for fraud and customer services for disputes; (3) monitoring anti-virus reports from mobile AV vendors or entering a collaboration; and, (4) intelligence gathering.

Because of the architecture of banking application 102, it is likely that if a second threat phase is reached, root exploits of devices such as, e.g., smartphones will be sold and widely accessible to criminals on the black market. In the second threat phase, intrinsic countermeasures must be embedded within to limit the abilities of malware to steal user credentials. And such must hold off the attacks at least until the operating system vendors have had enough time to patch their vulnerabilities, and all the affected users can recover control of their devices.

If an exploit was delivered from an app store by downloading a malicious app that used privilege escalation, the app store provider will be in a position to collaborate and provide a list of all users who have downloaded both the authentication application and the malicious application. These records can be used for a very targeted security warning to be sent out, and would yield very few false positives.

Malware infecting from a website drive-by will not be recorded and as easily accounted. It should however be less frequent in the second threat stage as it requires two exploits to coincide, one that seizes control through the web browser, and a second that escalates its privileges to root level. The defender's challenge is to modify the functioning of the application to lessen the bite of the current attack, if only for the duration, and until the vulnerability can be permanently patched. Several techniques can be employed to temporarily neuter malware.

The obfuscation of data stored in files on disk can be designed to deter users from trivially extracting keys by analyzing the stored files when running the app within an emulator, or on a jail broken-rooted smartphone. Such obfuscation can be amplified to require high level efforts from the attacker, e.g., to re-engineer the key recovery algorithm. Several core techniques include preventing attackers from harvesting the required data. A not-so-smart attacker would reverse engineer the authentication app, implement key recovery in the malware, and then upload just the key to the malware controller. As a countermeasure, simply changing the algorithm would require the attacker to re-engineer this type of malware, and would buy the defenders a couple of weeks of safety. A smarter attacker might have the malware upload all stored files made by the device application, so that if a recovery algorithm is changed, the malware need not be updated, and the recovery can be performed offline at a central location.

Therefore, defenders must increase the amount of storage used for the key, e.g., at least 10MB of stored data that might contain the key. The complexity of stored file data can be increased to make files in a complex directory structure that appear and disappear in an evolving process over multiple days. Making sure that any missing or extra files contribute to the recovery algorithm to stop it working. Incidental device setting data can be integrated into the storage format and recovery algorithms. In the case of a smartphone, such might include the IMEI, UDID, current date, volume and locality settings, and so forth. Things an attacker may have forgotten to harvest when their malware uploads the files from the app to the malware operator. Such could eviscerate the data that was harvested.

Confounding and obfuscation techniques used in combination can drive up the time it takes an attacker to advance their malware to the point they can harvest registration data from new infections.

Code obfuscation can be used together with data obfuscation to delay attackers trying to verify the algorithms that the mobile banking app 102 uses to recover keys. Forcing the malware to do work, rather than just interpreting the static application long-term data, observing the application, and then stealing the key at the moment of its use.

Well-designed and resistant applications will use a minimum of system calls, especially crypto system calls. Such calls are easy hooks for malware with root control to access the keys despite any intervening obfuscation mechanisms. Code obfuscation is easier to do for "C" code than it is for Java, favoring the iPhone platform. But it still has value on both platforms. Any obfuscation that requires an attacker to deploy a monitoring rootkit to watch a running process rather than just reading files from storage has already elevated the challenge and won a significant battle in the overall war.

Secure coprocessors may become available to hold crypto keys such as SIM cards, Secure Elements, and trusted platform modules (TPMs). But if the coprocessor uses an authentication algorithm with predictable challenge inputs, it may not help. For example, entirely time-based, counter-based one time passwords (OTPs) and transaction signing all have predictable challenges. An attacker can simply use temporary access to the security coprocessor from a main processor's operating system (OS) infected with malware to harvest a codebook or dictionary of inputs and outputs that represents everything needed in the future to pretend to have possession of the key.

It is only when a truly random challenge number is provided by the authentication service, such as in a challenge response protocol, that an attacker can have no idea in advance of an authentication attempt what data is needed to process using the stored key.

Unfortunately, moving to challenge-response authentication incurs significant usability penalties as the user must transfer the challenge onto the mobile device to be signed, either by entering it on the keypad or using some automated transfer such as 2D barcodes or flicker patterns.

An alternative is to implement clever logic in the secure coprocessor that limits the type of message that can be processed using the key. For instance, if the key is used to make an HMAC of an authentication input, it might use an internal monotonic counter to implement an HOTP password generator. Here an attacker can use its compromised access to the coprocessor to harvest many hundreds or thousands of OTPs, but they will be not be able to reset the secure processor to its original state, and are therefore likely to be detected immediately.

Thus for proper benefit a secure coprocessor needs to have specific security features available, and coprocessors that simply store a key securely but grant access to use it for any purpose have little value. In a long-term strategy, there will be limits on the effectiveness of secure coprocessors for defense and their likely value may mainly be in obscurity and creating a new barrier for the attacker to reverse engineer against. Therefore they may only be employed in the second threat phase if cost effective.

In the long term, especially considering a move away from OTPs toward transaction authentication, secure coprocessors will need to have trusted paths to the user. For instance, to display data that is about to be authenticated and to seek approval or rejection in a place that cannot be interfered with by the malware. However, such a trusted UI is unlikely to be graphically very pretty, and it is unlikely that trusted UI proposals will garner a lot of support from the handset manufacturers and it is crucial to have them on board.

An increasing suspicion is being directed at the global SSL-TLS infrastructure due to a proliferation of root certificate authorities. Such suspicions represent a major barrier to using any of the TLS libraries being provided by device manufacturers. The manufacturers might not have a configurable set of trusted certificates, and that makes authentication applications open to attack by powerful adversaries who are able to suppress certificate authorities.

The outer layer of TLS authentication can be considered to unreliable and removed. Inner RSA-AES proprietary encryption algorithms can be relied on instead to provide the necessary protection that would otherwise be lost. Removing TLS from the protocol could mitigate reputational and white-hat hacker attacks. In terms of malware resistance, even if the outer TLS is ineffective, there would be no harm in leaving it in. But in order to protect against a broader range of threats to authentication apps, a plan must be in place to remove and replace the TLS mechanisms.

Cryptomathic security cores have machinery in them to mitigate the risks of a layperson stealing some authentication credentials after gaining temporary access to an individual's device. A PIN is never good enough to prevent such access.

A mechanism to detect clock tampering, where in the case of a time-based OTP token, an attacker might borrow the device, set the clock forward by several days, then run the mobile banking app 102 and harvest future TOTP values for use in authentication, before returning the time back to normal. A clock tampering detector is needed to spot this change in the time sequence. And to initiate a warning message that can be displayed to the user, at an unknown time in the future, so that the attacker cannot set the time to just when this message is about to appear and then dismiss it.

Likewise, an IMEI-UDID check is included when recovering obfuscated data from storage to detect an attack that tried to take a full backup of, e.g., a smartphone and use it to restore the data to a different handset in the expectation of getting access to the original authentication credentials. A mechanism to prevent back-up of key material to the user's PC or to the cloud should also be included.

More advanced strategies for securing banking applications can best focus on breaking the criminal economic model, rather than trying to defend against an actual attack. One way is to reduce the profitability of successful attacks, and is actually a much easier job. When defending against technical breaches, a large code base has to be protected, and an attacker may come in anywhere, so the app developer is at a disadvantage. But, when the strategy is instead to attack a criminal's business foundation, now their operations must be hard-wearing everywhere, and so here lies the advantage.

Criminals have been able to specialize with the help of a large black-market economy and marketplace. Nowadays, exploits can be bought and sold on the market, botnets are available for rent, and so forth. The black-market economy does not have access to the same quality of dispute resolution and fair dealing frameworks that are available to the legitimate world. So a distant marketplace is hard for anyone of the bad guys to control.

Any design traps that can introduce uncertainty in the value of "a compromise on app X", or "1000 harvested login sets for app X", or other criminal product, will dramatically reduce the value perceived by buyers. The more unpredictable the traps, the better for thwarting buyers. For example, a probabilistic upgrade strategy could be used for a mobile banking app. If 75% of users receive a new version A, and 25% receive a version B, then after the upgrade when a crook harvests data, they won't get the data on one of the upgrade types. They don't realize quickly that they needed support for both types of app, so a large set of the data comes out as invalid. If they get surprised by this, a marketplace friction would generate trouble in selling the data. Because the data to be partly duff can inhibit cooperation. The crooks would have to develop ways of amortizing the data harvests into large enough sets that it won't matter if some of the credentials are invalid.

Sudden gluts in the availability of easily harvested data followed by droughts can cause criminals to over-reach and if they don't project the amount of data they will be able to steal correctly, then they over commit to an order and have to let the other party down.

Artificial diversity can be used to create multiple versions of apps, logon routines, credentials. and passwords. Such can increase the effort needed for an attack at a greater rate than it increases efforts needed to defend. Similar versions of apps with subtle differences are much harder to subjugate than are totally different versions.

So a long-term aim can be to convince crooks not to attack application X but to attack applications Y and Z instead. Not on the basis that X is more secure (this is an expensive race between X,Y and Z), but because doing continued business selling credentials from app X is just too risky.

This type of business model attack was commonplace in the Pay TV industry where a well-funded and organized group of attackers would reverse engineer and clone Pay TV subscription cards in order to sell subscriptions at a cheaper price. After initial shortcomings of the industry, one core strategy was to roll out new security measures iteratively with the next release just before a big sports event, meaning that pirated cards then stopped working. This caused the customers to complain to their black market provider, and would leave enough time for the customer to have a change of heart and buy a genuine subscription before the start of the match.

The nature of an arms-race on a locked platform such as the X-Box or a mobile smartphone rather than on a PC is such that these business model defenses are often very effective.

At a technical level, if may pay long term to use these high-level principles of driving up cost of attack at a deep technical level as well as at a strategic level. For example, non-standard crypto can be included for which there are no easy reference implementations. This is a common strategy for military security, to keep both the key and the algorithm secret. Non-standard crypto is not the same as home grown crypto, the differencing being that the former consists of conservative modifications made to existing crypto algorithms, such as AES with extra rounds, or DES with different S-boxes, whereas the latter usually is a brand new algorithm thought up on the back of an envelope by a developer with no crypto experience, and are usually variants of the Viginère or Caesar ciphers whose designs are hundreds of years old and trivial to break for an expert.

Many providers have specialist symmetric and asymmetric crypto cipher designers on their payrolls and are well placed to safely develop non-standard algorithm variations. In short, non-standard crypto is easy to write, but harder to reverse-engineer and debug, especially when moving implementations between different languages.

The criminal community is actually rather short of good cryptography know-how (although it is growing), as evidenced by the number of brand new viruses which still use very outdated algorithms such as the RC4 stream cipher. Malware authors seem reluctant to use code that they cannot copy-paste from somewhere else, and here non-standard crypto is the ultimate in murkiness. Advanced embodiments of the present invention scale up and outsource mobile security threat monitoring and intelligence. Services are offered by anti-virus companies and smaller intelligence-focused companies. The anti-virus companies use their wide deployment base to monitor and collate statistics, and the smaller intelligence-focused companies put most of their stock in human intelligence (HUMINT).

HUMINT is a viable long-term solution to infiltrate and keep watch upon the criminal economy and marketplace in order to gain a couple of weeks to a couple of months advance notice on how the capability of the market to provide services for new attacks develops.

In the case of payments card security, many observers have been involved in collaboratively monitoring and assessing intelligence output from human intelligence operatives to assess the rate at which known payment card security vulnerabilities such as SDA card cloning have permeated into the criminal economy, as opposed to these techniques being confined to experimenters and hobbyists. This way one can detect the difference between a future attack not seen deployed at scale, and an attack that is just about to scale up.

Such intelligence is invaluable in extending lifespan from security measures based on obscurity and economic attack. The defenses can be deployed at the right moment. And more importantly, it can keep an eye on the economy for evidence of an unexpected surge of innovation which might threaten to push fraud above an acceptable level. Thus, buying extra time to deploy an even larger set of counter measures.

So while high level statistical data on malware and threats may be useful to set overall departmental budgets for certain types of security at a high level in corporations, human intelligence and infiltration can and does yield genuinely useful information for iterative development of secure applications.

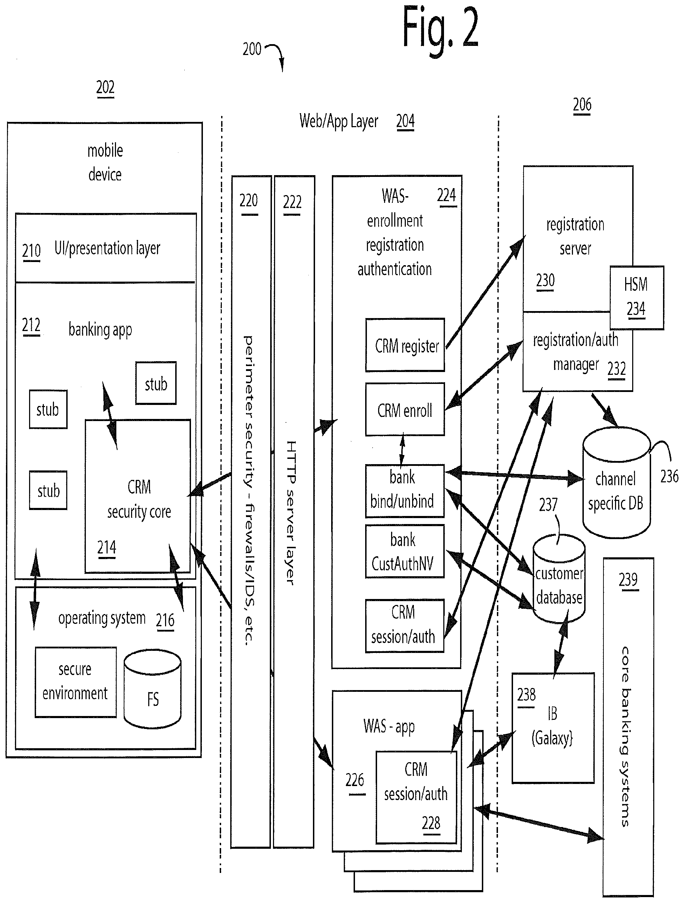

Fig. 2 represents a banking applications embodiment of the present invention, and is referred to here by the general reference numeral 200. Fig. 2 characterizes a mobile device 202 by its abstracted internal components including its mobile banking components, an Internet Web-App layer 204, and its back end systems 206.

Client application device 202 includes a commercially available platform such as, e.g., a smartphone platform that can download and execute "apps", like the Apple iPhone, Google Android, and Microsoft WINDOWS Phone or networked connected computers such as e.g. laptops, PCs, networked computers with client-side functionality. Embodiments of the present invention can be loaded and used on any or all of them by a mobile banking customer. Such mobile banking customer would typically already have a smartphone, and the embodiments and functions here would be installed and used under the direction and control of a particular bank or other financial institution.

The Client application device 202 includes a user interface (UI)-presentation layer 210, a mobile banking app 212 that includes a Cryptomathic (CRM) security core 214 with several stubs, and a corresponding operating system 216 like iOS, Blackberry, and Android. The user interface (Ul) can be implemented through a mix of local screens and WebView-rendered remote data provided by a server.

Device and system security are of the utmost in importance, and the fact that no special or reserved security hardware will be available in the typical smartphone or Client application device 202 makes a successful realization more challenging. In so far as the Client application device 202 is concerned, all the security must be implemented in software and such must resist attempts my fraudsters to stand in the middle of transactions and also thwart attempts at reverse engineering. The banking application 212 and back end systems 206, at least, are therefore configured to actively look for and detect malware, attempts at reverse engineering, man-in-the-middle attacks, and a host of other evil goings on.

Internet Web-App layer 204 includes a perimeter security layer 220, an HTTP server layer 222, an enrollment-registration-authentication layer 224, and a Websphere Application Server-app 226 with a CRM session-authenticator 228. There are two classes of communication between the mobile banking app 212 and its corresponding mobile banking system, (1) general protocols used by enrollment, registration and authentication, and all other apps, and (2) application-specific protocols as used in transactions.

The most challenging component to construct right is the app security core itself, supported on various platforms and extended with frequent releases according to a roadmap and security plan. Frequent internal release schedules would allow changes to the client-side components to be habitually deployed at least quarterly and within a matter of days-weeks in case of emergency response to threats.

The back end systems 206 include a registration server 230 and an internal registration-authentication manager 232 that depend on a hardware security module (HSM) 234. The back end systems 206 further include a channel specific database 236, a customer database 237, an Internet banking (IB) server 238, and CRM security core 214 banking system 239. The mobile banking server side infrastructure would typically use account TLS termination, IDS, security event monitoring, anomaly detection, and other best practice methods.

HSM 234 can be implemented with PKCS#I1 compatible HSMs, e.g., SafeNet ProtectServer PCI card HSMs, or Thales nCipher Connect network-attached HSM or may even be run in software if deemed acceptable to the security threat model. In cryptography, PKCS#11 is one of a family of standards called Public-Key Cryptography Standards (PKCS), published by RSA Laboratories. It defines a platform-independent application programming interface (API) to cryptographic tokens, such as hardware security modules and smartcards. The PKCS#11 standard refers to an API "Cryptoki" that is a concatenation of of "cryptographic token interface" pronounced "crypto-key". "PKCS#11" can also be used to refer to the API.

Registration server 230 handles every establishment of long-term device and app instance keys between its hardware security module 234 and the endpoint. It re-encrypts these keys for secure storage as a device-app instance in database 236. Such securely stored registration keys can also be accessed through the application using the security core, internal registration-authentication manager 232 uses the same key store to provide secure access to these keys from the Websphere Application Server layer 226 for session-transaction authentication by CRM authenticator 228.

Enrollment and application servers can be configured with Java modules that sit in the Websphere Application Server layer 204. These implement various protocols and authentication check mechanisms that marry up with the services provided by the mobile banking app security core 214.

Overall, embodiments of the present invention incorporate reverse engineering resistance techniques, device identification and malware detection. Many conventional devices and methods already exist to implement these characteristics. The exact things incorporated in any one implementation and how they are intended to respond would be important to maintain as a trade secret.

CRM security core 214 contains Cryptomathic modules configured to support the management of multiple keys held in OS-secured or hardware-secured storage. Such keys are both per-device and per app installation. Secure storage modules in CRM security core 214 leverage keychain stored keys and externally delivered secrets. CRM security core 214 supports session management, an authentication protocol for logon within a session, export of authentication tickets-cookies and stream-based communications security via an internal proxy server within CRM security core 214. Third party device identification and malware (compromise) detection technology can be integrated into CRM security core 214, e.g., similar to products marketed by Trusteer (Boston, MA) and ThreatMetrix, Inc. (San Jose, CA).

A strategic evolution of CRM security core 214 includes migration to secure element-SIM protection.

Maintenance may include honey pot maintenance and monitoring, with alerting within one week of activity and quarterly summaries..

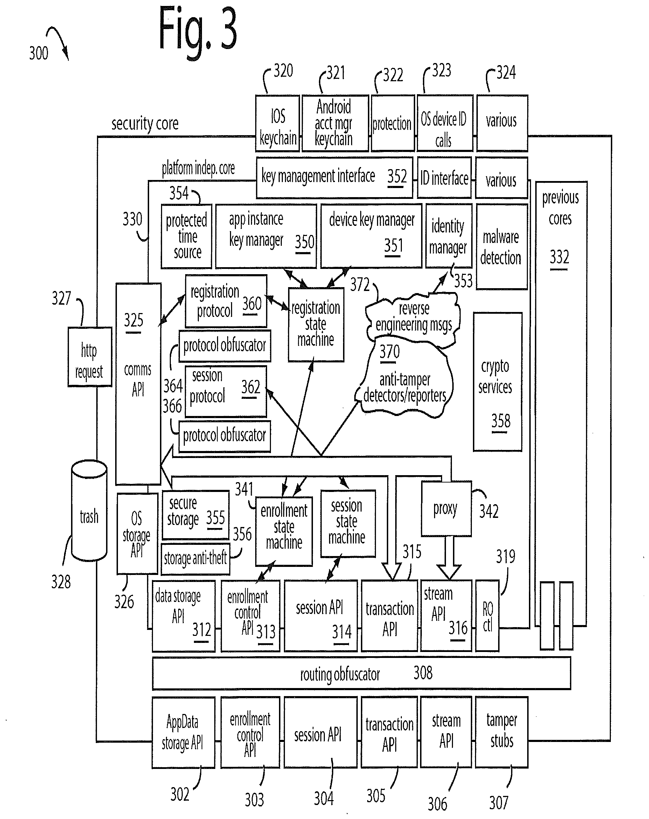

Fig. 3 represents a version of the banking app security core 214, in an embodiment of the present invention referred to herein by the general reference numeral 300. Security core 300 includes at its outer edges several dummy applications programming interfaces (APIs) 302-306 and tamper stubs 307 connected by a routing obfuscator 308 that route to a corresponding set of real APIs 312-316. External anti-tamper detector stubs 307 are used to sense tampering from outside the main core, and to allow the core to be more closely bound to the application. Such can also serve to camouflage the call profiles and API interactions.

A routing obfuscator (RO) controller 319 provides a dynamic mechanism to change the obfuscation according to tables that are initialized only at runtime. Initializing the API routing or jump tables only at run-time provides an effective defense against static analysis and can frustrate attempts at manual reverse engineering. The external APIs include data storage API 302 & 312, enrollment control API 303 & 313, session API 304 & 314, transaction API 305 & 315, and stream API 306 & 316.

The inspiration of a routing obfuscator is that it can conceal which calls on the external APIs 303-308 will correspond to which boxes in the row above, e.g., data storage API...RO ctl. It's like a secret permutation in a substitution cipher, except it changes every time a call is made, a bit like the German Military Enigma Machine rotor cipher made famous from WWII. For this reason, the row above is nearly identical to the row below, except for "routing obfuscator control" calls which are never exposed to the end user, and the "tamper stubs" which allow dummy external calls that do not call on anything on the inside. The routing obfuscator also mixes in potential, but not actual, mappings to functions in the previous core versions at the same time, making it appear feasible that that code too can be called.

The APIs facing inward toward the operating system include an iOS key management interface 320, a key management interface 321, a protection module 322, an OS device identification (ID) call interface 323, and miscellaneous interfaces 324. A communications interface 325 and an operating system (OS) storage API 326 are at the left in the illustration.

Within CRM security core 300 there is an inner core 330 constructed with a platform-independent code base that can be shared economically across all platforms that support the native code. Old core versions 332 and associated code are integrated into newer app versions as camouflage code. The whole appears as one undifferentiated glob, forcing runtime pathways to be analyzed to sort out the mass. Genuine code, albeit obsolete, is by far the best possible camouflage as it is 100% plausible on first inspection. Such previous core functionality is included side-by-side for reverse engineering resistance and is hypothetically, but not actually, accessible through the routing obfuscator 302.

Banking apps access security core 300 to manage their enrollment processes, establish secure sessions, authenticate themselves, communicate securely with mobile banking servers, and to secure store their own data on the file system. Recent transaction histories may be held locally for offline viewing via data storage API 302 & 312.

The enrollment control API 303 & 313 launches the enrollment processes to create device identities through profiling, for authenticating existing user credentials to the mobile banking servers, registering the device identity, and then sharing cryptographic keys. The enrollment API 303 & 313 manipulates an enrollment state machine 341 and includes program instructions to initiate profiling of a device for identity, malware and jailbreak status, to start authenticating to back end servers using customer provided data, and to attempt to create customer to app-instance bindings.

The session API 304 & 314 establishes a TLS outer tunnel and undertakes banking app instance authentication protocols within to demonstrate the app identity to servers. Call "authUp" commands are used to raise the authentication level of a session by fetching supplemental user credentials and security factors. These can include responses to challenges via out-of-band communications for what-you-have, what-you-know, who-you-are, etc. It can then export the current session authorization levels out into the application using tickets-cookies.

The transaction API 305 & 315 protects transaction messages using inner symmetric message authentication code (MAC) MACing and outer TLS security for confidentiality, and providing transaction integrity and integration into audit logging. With hash-based message authentication code (HMAC), encryption is optional. The default is to leave this to TLS to enable perimeter security inspection at mobile banking. Such API services are included to satisfy legal and compliance requirements.

The stream API 306 & 316 allows HTTP requests from WebView, browser UI control-component, or other outer application components to be routed through CRM security core 300 through a proxy 342 that handles additional authentication cookies, TLS encapsulation and performs some security filtering (URLs, links etc). The stream API 306 & 316 allows applications to securely communicate without depending on the developers to safely manage
cookie storage and deletion, and it sandboxes the capabilities of the web browser.

Tamper stubs 307 allow dummy API calls to be used in addition to the main calls, e.g., to disguise the interaction signatures between the main core and an outer app, and also to allow the security core 300 to enrich its interaction and interlock with the main app.

An app instance key manager 350 provides an interface to cryptographic keys unique to a particular instance of a particular banking app. These usually consist of an app identifier (app and version of app), a symmetric storage key, an installation unique identifier, and an asymmetric key for app authentication that can be used to sign protocol messages. The app instance key manager 350 stores its keys via a unified key management and usage interface that abstracts away the platform-specific details of the key storage available, and if necessary it emulates secure services.

A device key manager 351 provides an interface to device-wide cryptographic keys that are set up during a first registration of a first mobile banking app installed, and that remain persistent and unchanging within this group. These are stored through a key management interface 352 in the same way as app instance keys are, but with minor configuration differences to enable different visibility levels. Device-wide keys managed by this module are used only during a registration workflow 100 (Fig. 1) where they have a role to play in proving that an app instance freshly installed can build on existing trust established.

An identity manager 353 provides device identification and fingerprinting services. The powers assigned to identity manager 353 depend on the level of access mobile banking app needs to have to access operating-system protected personal data. For example, information about current device contacts, location, location history, time zone, cookies, and the like, can all build a profile of a device, but also can be hashed into a fuzzy identifier code. Such code can be shared with banking servers to identify the device beyond its explicit device metrics offered by some operating systems, e.g., device UDID.

A protected time source module 354 provides timestamps to other modules based on a system clock, but with additional monitoring and metrics to detect any attempts at clock tampering and freshness attacks.

A secure storage module 355 provides both obfuscated storage (encryption with a hardcoded key), and secure storage based on storage keys accessed from the app instance and device key managers 350 and 351. Secure storage module 355 allows banking apps to hold secure data files for maintaining long-term sensitive state. Secure storage module 355 can also keep a secondary layer of keys allowing uniform cryptographic processing regardless of the algorithm support levels offered through the key management interface into the device's own crypto APIs.

Secure storage module 355 includes an anti-theft mechanism 356 that disperses and expands storage using proprietary expansion algorithms and reverse-engineering resistant techniques. This means, e.g., that a key could be calculated deterministically from a 50-MB file on flash, or rather a tree of interweaving and modifying files, that is efficient to perform locally but that creates scaling challenges should a malware author wish to write simple malware that simply harvests data files and uploads them to a central server. This forces malware to detect and steal the data from files in-place during runtime and this type of malware is much more expensive and challenging to write. The secure storage element includes protection against device storage rollback attacks using an incrementing storage write counter that is held in a keychain.

A crypto services module 358 implements combinations of AES, RSA cryptography, hash functions and an HMAC construction that are inbuilt into the security core and do not depend on external crypto APIs with Standards that can be under flux. Crypto operations can be done locally and without acceleration since only short protocol messages of a few tens of kilobytes at most are being handled and local storage is used for transaction data. Since the crypto services module 358 is separate, the security core portability between platforms is improved. That in turn economizes on the consequential testing and maintenance costs.

Non-standard algorithms, such as modified versions of AES, can be used to increase the work required for reverse engineering. Such algorithms demand to be tediously re-constructed by hand and cross-checked by an attacker before they can use the results to decrypt protocol message data or polymorphic parts of the code. Most reverse engineers will, at some stage, implement decryption routines in a scripting language adjunct to the disassembler, e.g., IDA-python, and this drives up the cost of doing so. If there are compliance concerns, both non-standard and standard algorithms can be used sequentially.

A registration protocol module 360 and a session protocol module 362 implement secure key distribution protocols establishing both long-term and session-level cryptographic keys between security core 214 and the mobile banking backend systems 206. These protocols are operated through the outer TLS communications pipe. Long-term key generation on device and central long-term key generation with delivery to the device under an ephemeral key are possible.

Protocol obfuscators 364 and 366 obscure access to registration protocol module 360 and session protocol module 362. The registration and session management protocols 360 and 362 are typically in a slow state of flux and evolution as new features are added and as the app ecosystem matures. The apparent rate of such flux can be artificially accelerated for better resistance to reverse engineering. Such can help spawn dummy and modified evil apps that do not perform as intended. Thus these protocols include a protocol obfuscator and various arbitrarily different versions of the protocol intended to create confusion and complexity at a critical point in the development of an attack.

Internal anti-tamper detector stubs 370 are distributed throughout with monitors that try to spot deviations from normal operation of the program that might arise due to modification of the code, and to flag these exceptions in a way so that they can be acted on later after further review.

Covering traffic can be used effectively to hide the important traffic in plain view. Superfluous protocol messages and traffic can be co-generated by the security core to disturb attackers and disguise mechanisms that disperse and expand storage using proprietary expansion algorithms and reverse-engineering resistant techniques. Simple malware that simply harvests data files and uploads them to a central server will not do the job. The secure storage element 355 includes protection against device-storage-rollback attacks using an incrementing storage write counter that is held in the keychain.

In general, security core 214, 300 is mainly focused on security through obfuscation. A routing obfuscator operates at the outer layer. Previous cores are included as camouflage, an internal TLS library is used rather than the OS TLS layer, and cookies are managed internally in the core rather than in at the webkit-browser layer.

Security core embodiments of the present invention implement a registration protocol, encrypted storage, and mobile banking registration-enrollment workflows. They further support cryptographic TOTP-HOTP workflows and secure time, not now included in conventional mobile banking workflows. CRM security core 214, 300 can be implemented in both Java and "C" with a slim Objective-C wrapper, and is preferably hosted simultaneously on e.g., Apple iOS, Google Android, and Blackberry smartphone platforms.

Cryptomathic's conventional mobile OTP applications already have an error reporting framework and UI design guidelines that assign categorized codes to error states and gracefully handle error conditions. It is largely up to mobile banking providers to collect appropriate data at customer call centers and set up feedback channels to get information back to development teams for bug reports.

Various reverse-engineering resistance strategies are proposed to resist different classes of attacker, depending on the attackers' skills, education level, and location. The strategies each have different levels of effectiveness and incur different types of cost: some incur licensing costs, some cost man-hours during development, and some cost man-hours during production test-debug.

Techniques for reverse-engineering resistance can be applied at compile time to frustrate commercial decompilers and disassemblers, and at design time to create conceptual confusion and systematically mislead reverse engineers, driving up their costs of adapting to subsequent app updates.

The techniques can be prepared and tested ahead of time, but deployment is best withheld for as long as possible. Countermeasure deployment is keyed off intelligence gathering and mobile banking fraud monitoring programs, and optimized for maximum financial disruption to the enterprise of fraud compared to cost of countermeasure to develop and current size of countermeasure stockpile. During a first year of deployment countermeasures may be rolled out faster by attributing a higher monetary value to the countermeasure as a way of protecting the mobile banking brand in the transition to full acceptance of mobile banking across the customer base. Once full acceptance is reached some level of fraud is to be accepted.

Finally, several separate independently produced implementations of the same functional module, and that can be swapped at will, can be used to create an apparently high code delta between otherwise minor updates of an app. Promulgating one implementation to "update" another is used to synthetically drive up cost of adapting malware to attack "major new" app releases.

Although the present invention has been described in terms of the presently preferred embodiments, it is to be understood that the disclosure is not to be interpreted as limiting. Various alterations and modifications will no doubt become apparent to those skilled in the art after having read the above disclosure.

## Claims

1. A method implemented by a mobile banking application (102) installed on a mobile device (104) for providing a secure environment for the mobile banking application (102), the mobile banking application containing a hardcoded public key Kpub of a server (108) and delivered to the mobile device from an app store, the method comprising:
launching on the mobile device;
detecting a first install and entering an initialization phase;
generating a session key KS* and encrypting the session key KS* under the hardcoded public key Kpub to generate an encrypted session key {KS}Kpub;
delivering the encrypted session key, {KS}Kpub, to the server using a link comprising either a HTTP link or a HTTPS link depending on a URL provided for the server that is hardcoded into the mobile banking application;
receiving encrypted information [{K,serial,settings}]KS* in a message from the server over the link, the encrypted information [{K, serial, settings}]KS* comprising a unique serial number for the mobile device, a long-term key K for the mobile device, and server chosen configuration parameters, the encrypted information [{K, serial, settings}]KS* encrypted using the session key KS*;
using the session key KS* to decrypt and integrity-check the message to recover the long-term key K, and collect the configuration parameters; and
storing the long-term key K and configuration parameters in local storage (116) that is accessible only to the mobile banking application, wherein the long-term key K is obfuscated by encryption using a hardcoded key KO.

2. A mobile device (104) comprising a mobile banking application (102) installed on the mobile device, and local storage (116) that is accessible only to the mobile banking application, wherein the mobile banking application is configured to:
launch on the mobile device;
detect a first install and enter an initialization phase;
generate a session key KS* and encrypt the session key KS* under a hardcoded public key Kpub of a server (108) to generate an encrypted session key {KS}Kpub;
deliver the encrypted session key, {KS}Kpub, to the server using a link comprising either a HTTP link or a HTTPS link depending on a URL provided for the server that is hardcoded into the mobile banking application;
receive encrypted information [{K,serial,settings}]KS* in a message from the server over the link, the encrypted information [{K, serial, settings}]KS* comprising a unique serial number for the mobile device, a long-term key K for the mobile device, and server chosen configuration parameters, the encrypted information [{K, serial, settings}]KS* encrypted using the session key KS*;
use the session key KS* to decrypt and integrity-check the message to recover the long-term key K, and collect the configuration parameters; and
store the long-term key K and configuration parameters in said local storage, wherein said long-term key K is obfuscated by encryption using a hardcoded key KO.

3. A method performed by a server (108) in network communication with a mobile device (104), the method comprising:
receiving an encrypted session key, {KS}Kpub, from a mobile banking application (102) installed on the mobile device via a link comprising either a HTTP link or a HTTPS link, the encrypted session key generated by the mobile banking application by encrypting a session key KS* under a hardcoded public key Kpub of the server;
generating a unique serial number for the mobile device;
sending a request from the server to a hardware security module (110) to generate a long-term key K for the mobile device, and to use the session key to encrypt the long-term key, the serial number, and some server-chosen configuration parameters, to generate encrypted information [{K,serial,settings}]KS*, for storage in a long-term database (112) as a record;
receiving the encrypted information [{K,serial,settings}]KS* in a message from the hardware security module; and
transmitting the message from the server to the mobile banking application on the mobile device over the link.

4. A server (108) in network communication with a mobile device (104), the server configured to:
receive an encrypted session key, {KS}Kpub, from a mobile banking application (102) installed on the mobile device via a link comprising either a HTTP link or a HTTPS link, the encrypted session key generated by the mobile banking application by encrypting a session key KS* under a hardcoded public key Kpub of the server;
generate a unique serial number for the mobile device;
send a request from the server to a hardware security module (110) to generate a long-term key K for the mobile device, and to use the session key to encrypt the long-term key, the serial number, and some server-chosen configuration parameters, to generate encrypted information [{K,serial,settings}]KS*, for storage in a long-term database (112) as a record;
receive the encrypted information [{K,serial,settings}]KS* in a message from the hardware security module; and
transmit the message from the server to the mobile banking application on the mobile device over the link.

5. A server of claim 4, wherein the public key Kpub forms part of a server key pair, and the server is configured to keep a private half, Kpriv, of the server key pair in the hardware security module.

6. A server of claim 4 or 5, wherein the server is configured to deliver the long-term key K to an authentication service provider under a transport key.

7. A server of any of claims 4 to 6, wherein the server is configured to store the encrypted information [{K,serial,settings}]KS* in the long-term database as a record.

8. A system comprising:
the mobile device of claim 2; and
the server of any of claims 4 to 7.

## Patentansprüche

1. Verfahren, implementiert durch eine mobile Banking-Anwendung (102), welche auf einer mobilen Vorrichtung (104) installiert ist, zum Bereitstellen einer sicheren Umgebung für die mobile Banking-Anwendung (102), wobei die mobile Banking-Anwendung einen hartcodierten öffentlichen Schlüssel Kpub eines Servers (108) enthält und an die mobile Vorrichtung von einem App-Store bereitgestellt wird, wobei das Verfahren umfasst:
Starten auf der mobilen Vorrichtung;
Erfassen einer ersten Installation und Starten einer Initialisierungsphase;
Erzeugen eines Sitzungsschlüssels KS* und Verschlüsseln des Sitzungsschlüssels KS* unter dem hartcodierten öffentlichen Schlüssel Kpub, um einen verschlüsselten Sitzungsschlüssel {KS}Kpub zu erzeugen;
Bereitstellen des verschlüsselten Sitzungsschlüssels, {KS}Kpub, an den Server, unter Verwendung eines Links, umfassend entweder einen http-Link oder einen https-Link, in Abhängigkeit von einer URL, welche für den Server bereitgestellt wird, und welche in der mobilen Bank-Anwendung hartcodiert ist;
Empfangen von verschlüsselten Informationen [{K, serial, settings}]KS* in einer Nachricht von dem Server über den Link, wobei die verschlüsselten Informationen [{K, serial, settings}]KS* eine eindeutige Seriennummer für die mobile Vorrichtung, einen langlebigen Schlüssel K für die mobile Vorrichtung, und vom Server ausgewählte Konfigurationsparameter umfassen, wobei die verschlüsselten Informationen [{K, serial, settings}]KS* unter Verwendung des Sitzungsschlüssels KS* verschlüsselt werden;
Verwenden des Sitzungsschlüssels KS*, um die Nachricht zu entschlüsseln und auf Integrität zu prüfen, um den langlebigen Schlüssel K wiederherzustellen und die Konfigurationsparameter zu sammeln; und
Speichern des langlebigen Schlüssels K und der Konfigurationsparameter in einem lokalen Speicher (116), welcher nur der mobilen Bank-Anwendung zugänglich ist, wobei der langlebige Schlüssel K durch die Verschlüsselung unter Verwendung eines hartcodierten Schlüssels KO verschleiert wird.

2. Mobile Vorrichtung (104), umfassend eine mobile Banking-Anwendung (102), welche auf der mobilen Vorrichtung installiert ist, und einen lokalen Speicher (116), welcher nur der mobilen Banking-Anwendung zugänglich ist, wobei die mobile Banking-Anwendung konfiguriert ist, zum:
Starten auf der mobilen Vorrichtung;
Erfassen einer ersten Installation und Starten einer Initialisierungsphase;
Erzeugen eines Sitzungsschlüssels KS* und Verschlüsseln des Sitzungsschlüssels KS* unter dem hartcodierten öffentlichen Schlüssel Kpub eines Servers (108), um einen verschlüsselten Sitzungsschlüssel {KS}Kpub zu erzeugen;
Bereitstellen des verschlüsselten Sitzungsschlüssels, {KS}Kpub, an den Server, unter Verwendung eines Links, umfassend entweder einen http-Link oder einen https-Link, in Abhängigkeit von einer URL, welche für den Server bereitgestellt wird, und welche in der mobilen Bank-Anwendung hartcodiert ist;
Empfangen von verschlüsselten Informationen [{K, serial, settings}]KS* in einer Nachricht von dem Server über den Link, wobei die verschlüsselten Informationen [{K, serial, settings}]KS* eine eindeutige Seriennummer für die mobile Vorrichtung, einen langlebigen Schlüssel K für die mobile Vorrichtung, und vom Server ausgewählte Konfigurationsparameter umfassen, wobei die verschlüsselten Informationen [{K, serial, settings}]KS* unter Verwendung des Sitzungsschlüssels KS* verschlüsselt werden;
Verwenden des Sitzungsschlüssels KS*, um die Nachricht zu entschlüsseln und auf Integrität zu prüfen, um den langlebigen Schlüssel K wiederherzustellen und die Konfigurationsparameter zu sammeln; und
Speichern des langlebigen Schlüssels K und der Konfigurationsparameter in dem lokalen Speicher, wobei der langlebige Schlüssel K durch die Verschlüsselung unter Verwendung eines hartcodierten Schlüssels KO verschleiert wird.

3. Verfahren, welches durch einen Server (108) ausgeführt wird, welcher mit einer mobilen Vorrichtung (104) kommuniziert, wobei das Verfahren umfasst:
Empfangen eines verschlüsselten Sitzungsschlüssels, {KS}Kpub, von einer mobilen Banking-Anwendung (102), welche auf der mobile Vorrichtung installiert ist, über einen Link, welcher entweder einen http-Link oder einen https-Link umfasst, wobei der verschlüsselte Sitzungsschlüssel durch die mobile Banking-Anwendung durch Verschlüsseln eines Sitzungsschlüssels KS* unter einem hartcodierten öffentlichen Schlüssel Kpub des Servers erzeugt wird;
Erzeugen einer eindeutigen Seriennummer für die mobile Vorrichtung;
Senden einer Anforderung von dem Server an ein Hardware-Sicherheitsmodul (110), um einen langlebigen Schlüssel K für die mobile Vorrichtung zu erzeugen, und um den Sitzungsschlüssel zu verwenden, um den langlebigen Schlüssel, die Seriennummer und einige vom Server ausgewählte Konfigurationsparameter zu verschlüsseln, um verschlüsselte Informationen [{K, serial, settings}]KS* zum Speichern in einer langlebigen Datenbank (112) als Datensatz zu erzeugen;
Empfangen der verschlüsselten Informationen [{K, serial, settings}]KS* in einer Nachricht von dem Hardware-Sicherheitsmodul; und
Übertragen der Nachricht von dem Server an die mobile Banking-Anwendung auf der mobilen Vorrichtung über den Link.

4. Server (108), welcher in Netzkommunikation mit einer mobilen Vorrichtung (104) steht, wobei der Server konfiguriert ist, zum:
Empfangen eines verschlüsselten Sitzungsschlüssels, {KS}Kpub, von einer mobilen Banking-Anwendung (102), welche auf der mobile Vorrichtung installiert ist, über einen Link, welcher entweder einen http-Link oder einen https-Link umfasst, wobei der verschlüsselte Sitzungsschlüssel durch die mobile Banking-Anwendung durch Verschlüsseln eines Sitzungsschlüssels KS* unter einem hartcodierten öffentlichen Schlüssel Kpub des Servers erzeugt wird;
Erzeugen einer eindeutigen Seriennummer für die mobile Vorrichtung;
Senden einer Anforderung von dem Server an ein Hardware-Sicherheitsmodul (110), um einen langlebigen Schlüssel K für die mobile Vorrichtung zu erzeugen, und um den Sitzungsschlüssel zu verwenden, um den langlebigen Schlüssel, die Seriennummer und einige vom Server ausgewählte Konfigurationsparameter zu verschlüsseln, um verschlüsselte Informationen [{K, serial, settings}]KS* zum Speichern in einer langlebigen Datenbank (112) als Datensatz zu erzeugen;
Empfangen der verschlüsselten Informationen [{K, serial, settings}]KS* in einer Nachricht von dem Hardware-Sicherheitsmodul; und
Übertragen der Nachricht von dem Server an die mobile Banking-Anwendung auf der mobilen Vorrichtung über den Link.

5. Server nach Anspruch 4, wobei der öffentliche Schlüssel Kpub Teil eines Serverschlüsselpaars ist, und wobei der Server konfiguriert ist, um eine private Hälfte, Kpriv, des Serverschlüsselpaars in dem Hardware-Sicherheitsmodul zu halten.

6. Server nach Anspruch 4 oder 5, wobei der Server konfiguriert ist, um den langlebigen Schlüssel an einen Authentifizierungsdienstanbieter unter einem Transportschlüssel bereitzustellen.

7. Server nach einem der Ansprüche 4 bis 6, wobei der Server konfiguriert ist, um die verschlüsselten Informationen [{K, serial, settings}]KS* in der langlebigen Datenbank als Datensatz zu speichern.

8. System, umfassend:
die mobile Vorrichtung nach Anspruch 2; und
der Server nach einem der Ansprüche 4 bis 7.

## Revendications

1. Procédé mis en œuvre par une application de services bancaires mobiles (102) qui est installée sur un dispositif mobile (104) pour fournir un environnement sécurisé pour l'application de services bancaires mobiles (102), l'application de services bancaires mobiles contenant une clé publique figée par codage en dur Kpub d'un serveur (108) et étant délivrée sur le dispositif mobile depuis une plate-forme d'applications, le procédé comprenant :
le lancement sur le dispositif mobile ;
la détection d'une première installation et l'entrée dans une phase d'initialisation ;
la génération d'une clé de session KS* et le cryptage de la clé de session KS* sous la clé publique figée par codage en dur Kpub pour générer une clé de session cryptée {KS}Kpub ;
la délivrance de la clé de session cryptée, {KS}Kpub, sur le serveur en utilisant un lien qui comprend soit un lien HTTP soit un lien HTTPS en fonction d'un URL qui est fourni pour le serveur et qui est figé par codage en dur à l'intérieur de l'application de services bancaires mobiles ;
la réception d'une information cryptée [{K, sériai, settings}]KS* à l'intérieur d'un message en provenance du serveur sur le lien, l'information cryptée [{K, sériai, settings}]KS* comprenant un numéro de série unique pour le dispositif mobile, une clé de long terme K pour le dispositif mobile et des paramètres de configuration choisis par serveur, l'information cryptée [{K, sériai, settings}]KS* étant cryptée en utilisant la clé de session KS* ;
l'utilisation de la clé de session KS* pour décrypter et soumettre à un contrôle d'intégrité le message pour récupérer la clé de long terme K et pour collecter les paramètres de configuration ; et
le stockage de la clé de long terme K et des paramètres de configuration à l'intérieur d'un moyen de stockage local (116) qui est accessible seulement à l'application de services bancaires mobiles, dans lequel la clé de long terme K est brouillée par cryptage en utilisant une clé figée par codage en dur KO.

2. Dispositif mobile (104) comprenant une application de services bancaires mobiles (102) qui est installée sur le dispositif mobile, et un moyen de stockage local (116) qui est accessible seulement à l'application de services bancaires mobiles, dans lequel l'application de services bancaires mobiles est configurée pour réaliser les actions qui suivent :
le lancement sur le dispositif mobile ;
la détection d'une première installation et l'entrée dans une phase d'initialisation ;
la génération d'une clé de session KS* et le cryptage de la clé de session KS* sous une clé publique figée par codage en dur Kpub d'un serveur (108) pour générer une clé de session cryptée {KS}Kpub ;
la délivrance de la clé de session cryptée, {KS}Kpub, sur le serveur en utilisant un lien qui comprend soit un lien HTTP soit un lien HTTPS en fonction d'un URL qui est fourni pour le serveur et qui est figé par codage en dur à l'intérieur de l'application de services bancaires mobiles ;
la réception d'une information cryptée [{K, sériai, settings}]KS* à l'intérieur d'un message en provenance du serveur sur le lien, l'information cryptée [{K, sériai, settings}]KS* comprenant un numéro de série unique pour le dispositif mobile, une clé de long terme K pour le dispositif mobile et des paramètres de configuration choisis par serveur, l'information cryptée [{K, sériai, settings}]KS* étant cryptée en utilisant la clé de session KS* ;
l'utilisation de la clé de session KS* pour décrypter et soumettre à un contrôle d'intégrité le message pour récupérer la clé de long terme K et pour collecter les paramètres de configuration ; et
le stockage de la clé de long terme K et des paramètres de configuration à l'intérieur dudit moyen de stockage local, dans lequel ladite clé de long terme K est brouillée par cryptage en utilisant une clé figée par codage en dur KO.

3. Procédé réalisé par un serveur (108) en communication par réseau avec un dispositif mobile (104), le procédé comprenant :
la réception d'une clé de session cryptée, {KS}Kpub, en provenance d'une application de services bancaires mobiles (102) qui est installée sur le dispositif mobile via un lien qui comprend soit un lien HTTP soit un lien HTTPS, la clé de session cryptée étant générée par l'application de services bancaires mobiles en cryptant une clé de session KS* sous une clé publique figée par codage en dur Kpub du serveur ;
la génération d'un numéro de série unique pour le dispositif mobile ;
l'envoi d'une requête depuis le serveur sur un module de sécurité matériel (110) pour générer une clé de long terme K pour le dispositif mobile, et pour utiliser la clé de session pour crypter la clé de long terme, le numéro de série et certains paramètres de configuration choisis par serveur, pour générer une information cryptée [{K, sériai, settings}]KS*, pour un stockage dans une base de données de long terme (112) en tant qu'enregistrement ;
la réception de l'information cryptée [{K, sériai, settings}]KS* à l'intérieur d'un message en provenance du module de sécurité matériel ; et
la transmission du message depuis le serveur à l'application de services bancaires mobiles sur le dispositif mobile sur le lien.

4. Serveur (108) en communication par réseau avec un dispositif mobile (104), le serveur étant configuré pour réaliser les actions qui suivent :
la réception d'une clé de session cryptée, {KS}Kpub, en provenance d'une application de services bancaires mobiles (102) qui est installée sur le dispositif mobile via un lien qui comprend soit un lien HTTP soit un lien HTTPS, la clé de session cryptée étant générée par l'application de services bancaires mobiles en cryptant une clé de session KS* sous une clé publique figée par codage en dur Kpub du serveur ;
la génération d'un numéro de série unique pour le dispositif mobile ;
l'envoi d'une requête depuis le serveur sur un module de sécurité matériel (110) pour générer une clé de long terme K pour le dispositif mobile, et pour utiliser la clé de session pour crypter la clé de long terme, le numéro de série et certains paramètres de configuration choisis par serveur, pour générer une information cryptée [{K, sériai, settings}]KS*, pour un stockage dans une base de données de long terme (112) en tant qu'enregistrement ;
la réception de l'information cryptée [{K, sériai, settings}]KS* à l'intérieur d'un message en provenance du module de sécurité matériel ; et
la transmission du message depuis le serveur à l'application de services bancaires mobiles sur le dispositif mobile sur le lien.

5. Serveur selon la revendication 4, dans lequel la clé publique Kpub forme une partie d'une paire de clés de serveur, et le serveur est configuré pour conserver une moitié privée, Kpriv, de la paire de clés de serveur dans le module de sécurité matériel.

6. Serveur selon la revendication 4 ou 5, dans lequel le serveur est configuré pour délivrer la clé de long terme K à un fournisseur de services d'authentification sous une clé de transport.

7. Serveur selon l'une quelconque des revendications 4 à 6, dans lequel le serveur est configuré pour stocker l'information cryptée [{K, sériai, settings}]KS* dans la base de données de long terme en tant qu'enregistrement.

8. Système comprenant :
le dispositif mobile selon la revendication 2 ; et
le serveur selon l'une quelconque des revendications 4 à 7.
